(19) **Europäisches Patentamt**

**European Patent Office**

**Office européen des brevets**

(11) **EP 0 819 702 B1**

(12) **FASCICULE DE BREVET EUROPEEN**

(45) Date de publication et mention
de la délivrance du brevet:
**25.10.2000 Bulletin 2000/43**

(51) Int Cl.⁷: **C08B 30/10**, A23L 1/105,
C12N 1/20, C05F 7/00

(21) Numéro de dépôt: **97401682.6**

(22) Date de dépôt: **11.07.1997**

(54) **Composition nutritive résultant de la trempe du mais et son procédé d'obtention**

Nährungszusammensetzung aus dem Maisquellwasser und Verfahren zu deren Herstellung

Nutritive composition from corn steeping and process for obtaining the same

(84) Etats contractants désignés:
**AT BE CH DE DK ES FI FR GB IT LI NL SE**

(30) Priorité: **18.07.1996 FR 9609015**

(43) Date de publication de la demande:
**21.01.1998 Bulletin 1998/04**

(73) Titulaire: **Roquette Frères**
**62136 Lestrem (FR)**

(72) Inventeurs:
• **Saniez, Marie-Hélène**
**59350 Saint Andre (FR)**
• **Erpicum, Thomas**
**62136 Richebourg (FR)**

(74) Mandataire: **Boulinguiez, Didier**
**Cabinet Plasseraud**
**84, rue d'Amsterdam**
**75440 Paris Cedex 09 (FR)**

(56) Documents cités:
**FR-A- 2 254 641        US-A- 4 914 029**

• **CHEMICAL ABSTRACTS, vol. 117, no. 21, 23
novembre 1992 Columbus, Ohio, US; abstract
no. 211601, XP002027167 & JP 04 198 080 A
(MITSUI TOATSU CHEMICALS, INC.) 17 juillet
1992**

EP 0 819 702 B1

**Description**

La présente invention a pour objet une composition nutritive améliorée résultant de la trempe du maïs.

Elle vise également le procédé d'obtention d'une telle composition, ainsi que son application comme milieu de culture dans les industries de fermentation, comme aliment ou additif alimentaire dans des compositions destinées aux humains ou aux animaux et comme agent utile à la préparation d'engrais destinés aux végétaux.

La trempe du maïs constitue la première étape de l'extraction de l'amidon en amidonnerie humide. Elle consiste à maintenir le maïs placé dans des silos pendant un temps donné au sein d'une eau chaude contenant une faible quantité d'anhydride sulfureux, ceci afin de faciliter la séparation ultérieure protéines-cellulose-amidon, et d'empêcher par ailleurs la croissance de microorganismes indésirables.

Au cours de cette opération, deux phénomènes essentiels prennent place simultanément. D'une part, les matières solubles hautement fermentescibles contenues dans les grains de maïs sont transférées dans les eaux de trempe. D'autre part, les conditions de trempe (présence de sulfites, de sucres réducteurs libres, niveau de température) sont favorables au développement rapide de bactéries, lactiques principalement.

Le principal intérêt des eaux de trempe, appelées couramment "corn-steep" par l'homme du métier, tient à leur composition en composés essentiels qui sont issus du transfert de ces matières solubles. Ces composés constituent des facteurs favorables à la croissance des microorganismes comme à la production de métabolites secondaires, et font des eaux de trempe une source idéale de matières nutritives dans les industries de fermentation.

En effet, le corn-steep contient en tant que sources de carbone facilement assimilables : des sucres et des acides organiques, comme sources d'azote et de carbone : des amino-acides et des polypeptides et comme sources d'oligo-éléments nécessaires à la croissance des microorganismes : des agents "tampons" et des minéraux.

En outre, il constitue un substrat relativement peu coûteux, comparativement aux extraits de levures qui représentent la matière de référence dans ce domaine, et qui sont utilisés également en alimentation humaine et animale.

Par ailleurs, il est connu que l'utilisation du corn-steep en remplacement de sources d'azote complexes telles que les protéines de coton ou de soja, permet d'augmenter de manière substantielle les rendements de production d'antibiotiques.

Pour une utilisation en fermentation, le corn-steep doit être soumis au préalable à une stérilisation, dont les conditions de température et de pH ainsi que la durée sont choisies afin d'obtenir la destruction des microorganismes. Ainsi, la température est généralement comprise entre 105 et 130°C et le pH varie entre 3,0 et 8,0. Or, ces conditions de température et de pH provoquent la précipitation de certains constituants du corn-steep, ce qui entraîne de nombreux inconvénients.

En effet, l'utilisation d'un tel corn-steep non homogène pose un problème au niveau de sa préparation, et en particulier lors de sa concentration. En outre, sa mise en oeuvre entraîne la formation d'un dépôt important sur les parois des fermenteurs, dépôt qui risque de colmater les échangeurs de température. Enfin, la récupération des produits de fermentation peut être perturbée de manière importante suite au colmatage des membranes et des filtres.

Par ailleurs, la présence de substances réductrices libres dans le corn-steep entraîne une coloration importante du produit lors des opérations de stérilisation et de concentration, cette coloration se traduisant par une diminution de la disponibilité de certaines des substances nutritives qu'il contient.

En outre, ces substances réductrices libres provoquent l'instabilité microbiologique du produit en favorisant la croissance de levures au cours de son stockage.

Parmi les solutions proposées pour résoudre le problème de l'hétérogénéité du corn-steep, la plus ancienne est celle qui consiste à extraire du corn-steep, par précipitation chimique, les substances responsables de la coagulation. Ainsi, l'addition au corn-steep d'agents alcalins (chaux, soude, ...) ou de composés métalliques (sels d'aluminium notamment), afin de faire précipiter certaines protéines, les composés sulfite ou sulfate ou encore l'acide phytique, est connue. Cependant, outre le surcoût associé à ce traitement supplémentaire, l'inconvénient majeur en est l'élimination de substances nutritives du milieu. De plus, un tel traitement nécessite l'introduction dans le corn-steep de produits chimiques dans des quantités qui peuvent être importantes, ce qui modifie notablement sa composition et limite ainsi ses utilisations potentielles.

Il a également été fait appel à l'ultrafiltration pour séparer des eaux de trempe du maïs les espèces moléculaires, notamment protéines et peptides, coagulables à la chaleur. Cette technique a d'ailleurs fait l'objet d'un brevet français N° 2 140 672 délivré à la Société SCHOLTEN-HONIG RESEARCH.

Enfin, il a été proposé plus récemment de traiter le corn-steep par des enzymes.

Ainsi, le brevet américain N° 4 914 029 délivré à la Société DORR-OLIVER décrit un traitement par un mélange phytase-cellulase.

Cependant, si un tel traitement permet d'éviter la précipitation de l'acide phytique, il ne suffit pas à résoudre totalement le problème de la formation d'un précipité lors de la stérilisation du corn-steep.

Par ailleurs, un traitement par une protéase est décrit dans le brevet japonais N° 04-198 080 déposé par la Société MITSUI TOATSU CHEMICALS : l'action d'une telle enzyme sur un corn-steep contribue à l'amélioration de sa filtrabilité. Le corn-steep ainsi traité est destiné à la préparation d'un engrais liquide.

De même, M. ROUSHDI, Y. GHALI et A. HASSANEAN ont étudié l'action de deux enzymes protéolytiques (l'Alcalase et la Neutrase fabriquées par la Société NOVO) sur les eaux de trempe du maïs afin de réduire la durée de l'opération de trempe et d'obtenir un amidon ayant une teneur réduite en protéine.

Toutefois, il est apparu qu'un traitement du corn-steep avec une enzyme protéolytique n'était pas suffisant pour écarter de manière satisfaisante les problèmes évoqués précédemment.

Il a été proposé, dans le brevet français N° 2 254 641 déposé par la Société CPC INTERNATIONAL, d'ajouter des bactéries lactiques à l'eau de trempe au cours du processus de trempe dans le seul but d'en réduire la durée. Il a été remarqué qu'une diminution des teneurs en sucres réducteurs des eaux de trempe était alors également obtenue, celles-ci évoluant de 6,5 % à 1,7-1,9 %.

Cependant, aucun des traitements décrits et mis en oeuvre jusqu'à présent n'a permis de résoudre de manière satisfaisante le problème de la perte d'une fraction non négligeable des constituants du corn-steep et donc de ses qualités nutritionnelles, que ce soit par la formation d'un précipité ou par l'apparition d'une coloration marquée lors de sa stérilisation, ou par une évolution de l'aspect du produit et en particulier de sa couleur, et de ses qualités microbiologiques au cours de son stockage.

Or, la demanderesse vient de mettre au point un corn-steep dont les qualités nutritionnelles sont améliorées, qui résiste au traitement thermique nécessité par son utilisation comme milieu de fermentation, ou comme additif en alimentation humaine ou animale et dont la stabilité microbiologique est optimale.

En outre, cette composition nutritive présente l'avantage de pouvoir être concentrée au delà de 60 % de matière sèche sans se heurter à un phénomène de prise en masse, comme dans le cas des corn-steep de l'art antérieur. Une telle concentration permet de conférer à la composition nutritive selon l'invention une stabilité microbiologique encore améliorée et une viscosité parfaitement adaptée aux conditions industrielles de mise en oeuvre, telles que notamment le transfert par des pompes. Elle présente également un avantage économique, dû à une réduction des coûts de stockage, et de transport, mais également des coûts engendrés par l'étape d'évaporation. En effet, le colmatage des évaporateurs de corn-steep au niveau des réchauffeurs représente un problème important, dont la seule solution apportée aujourd'hui consiste en un nettoyage des évaporateurs et des tuyauteries par mise en oeuvre de soude et d'acide nitrique.

Cet avantage économique est encore appréciable au niveau de l'étape de séchage d'aliments secs pour les animaux, obtenus à partir d'une composition selon l'invention, par exemple par incorporation de celle-ci sur des drêches de maïs sèches.

A l'avantage économique s'ajoute dans ce cas un intérêt écologique puisque les nuisances olfactives associées au séchage sont notablement réduites.

L'invention se rapporte donc en premier lieu à une composition nutritive caractérisée par le fait qu'elle présente un rapport concentration en phosphore inorganique sur concentration en phosphore total compris entre 35 et 95 %, que le dosage des protéines qu'elle contient, réalisé selon un test C, donne une valeur inférieure ou égale à 5, de préférence inférieure ou égale à 1, et de manière encore plus préférentielle inférieure ou égale à 0,5 et que sa teneur en substances réductrices totales est inférieure ou égale à 0,9 %.

Les concentrations en phosphore inorganique et phosphore total sont mesurées selon des méthodes connues telles que celles décrites ci-après.

En ce qui concerne le phosphore inorganique, la méthode de référence consiste à mesurer l'absorbance, à une longueur d'onde de 360 nm, d'un complexe obtenu par réaction entre le phosphore inorganique et le molybdate d'ammonium, absorbance directement proportionnelle à la quantité de phosphore inorganique présent dans l'échantillon. Pour la mise en oeuvre de cette méthode, on peut utiliser par exemple le kit de dosage vendu par la Société GILFORD DIAGNOSTICS sous la référence 722058.

En ce qui concerne le phosphore total, son dosage est réalisé selon la méthode norme ISO 3946, qui repose sur le même principe que celui appliqué à la détermination de la concentration en phosphore inorganique, décrit ci-dessus. Une étape préalable est toutefois mise en oeuvre, étape qui consiste à détruire les matières organiques des produits à doser, par minéralisation à l'aide d'un mélange sulfonitrique et transformation des phosphates en orthophosphates. Les étapes suivantes consistent à former le complexe molybdique, puis à mesurer l'absorbance à une longueur d'onde de 825 nm.

De préférence, le rapport concentration phosphore inorganique sur concentration en phosphore total (Pi/Pt) est compris entre 60 et 95 %, et de manière encore plus préférentielle, entre 75 et 85 %.

En ce qui concerne le test C appliqué aux compositions selon l'invention, celui-ci a pour but de mesurer la concentration en protéine pour 100 grammes de matière sèche du surnageant de ces compositions.

Pour ce faire, on réalise une mesure spectrophotométrique de ces surnageants mis en présence d'un réactif coloré selon la méthode Bradford, méthode connue pour le dosage des protéines et décrite notamment dans Analysis Biochemistry (1976) 72, 248.

Dans le cas présent, le réactif mis en oeuvre est le Coomassie Brilliant Blue G 250, fabriqué par la Société PIERCE sous la référence 23200, et qui a la particularité de se lier aux protéines et aux peptides de plus de 20 amino-acides en solution acide, cette liaison s'accompagnant d'un changement de couleur du brun rouge au bleu.

Par mesure de l'absorbance à une longueur d'onde de 595 nm, absorbance correspondant au taux de réactif lié aux protéines présentes et par conséquent, proportionnelle à la quantité de protéines, puis comparaison avec une courbe étalon obtenue pour différentes concentrations d'une protéine standard (Bovine Serum Albumine, Réf. 23209 chez PIERCE), on détermine la concentration en protéine des surnageants des compositions.

Pour réaliser cette mesure, on amène au préalable la composition nutritive à tester à une matière sèche de 30 % en poids. Celle-ci est ensuite centrifugée à 5000 g durant 15 mn et le surnageant est récupéré, et amené à une matière sèche de 25 % en poids. On applique alors la méthode de Bradford à ce surnageant par introduction du réactif coloré, mélange, puis lecture de l'absorbance.

La valeur obtenue, correspondant à la concentration en protéine en gramme par litre de surnageant, est alors convertie en une concentration en gramme pour 100 g de matière sèche de surnageant.

Les compositions nutritives objet de la présente invention sont telles que la concentration en protéine en grammes pour 100 g de matière sèche de surnageant est inférieure ou égale à 5, et de préférence inférieure ou égale à 1. De manière encore plus préférentielle, les compositions selon l'invention présenteront une concentration en protéines en grammes pour 100 g de matière sèche de surnageant inférieure ou égale à 0,5.

Pour mesurer la teneur en substances réductrices totales d'une composition nutritive selon l'invention, on soumet celle-ci à une hydrolyse acide en la portant à ébullition pendant 1 heure en présence d'acide chlorhydrique afin d'hydrolyser les poly- et oligo- saccharides présents. On procède ensuite au dosage de la totalité des substances réductrices selon la méthode de BERTRAND telle que notamment décrite dans le "Manuel d'analyse chimique volumétrique", H. MATHIEU, Ed. MASSON, 1946, p 398, selon le principe suivant :

On chauffe la solution contenant des substances réductrices avec un excès de réactif cuprosodique, qui entraîne une précipitation de l'oxyde cuivreux dans une quantité proportionnelle à la concentration en substances réductrices présentes dans la solution. Ce précipité, mis au contact d'une solution sulfurique de sulfate ferrique, réduit une partie du sel ferrique en sulfate ferreux. Le sulfate ferreux est alors dosé par une solution de $KMnO_4$ de titre connu, ce qui permet de déduire la quantité d'oxyde cuivreux correspondante et donc, la quantité de substances réductrices initiales présente dans la solution.

La teneur en substances réductrices totales inclut donc à la fois celle en substances réductrices libres et celle en substances réductrices susceptibles d'être libérées.

Or, si les substances réductrices libres contribuent, comme exposé précédemment, à l'instabilité physique et microbiologique des compositions, la présence de substances réductrices susceptibles d'être libérées représente un risque certain d'augmentation de cette instabilité au cours du temps.

Les compositions nutritives selon l'invention présentent une teneur en substances réductrices totales inférieure ou égale à 0,9 % en poids par rapport au poids de matière sèche des compositions, de préférence inférieure ou égale à 0,5 % et de manière encore plus préférentielle inférieure ou égale à 0,2 %.

L'invention se rapporte en second lieu à un procédé d'obtention d'une composition nutritive résultant de la trempe de maïs qui possède les caractéristiques mentionnées ci-dessus.

Ce procédé consiste à traiter les eaux de trempe du maïs dans lesquelles ont été ajoutées des bactéries lactiques vivantes, avec au moins une protéase et au moins une phytase.

De manière surprenante et inattendue, la Société Demanderesse a mis en évidence qu'un traitement combiné des eaux de trempe du maïs avec au moins une protéase et au moins une phytase en présence de bactéries lactiques vivantes ajoutées donnait des résultats particulièrement intéressants, auxquels, en toute logique, l'homme du métier ne pouvait s'attendre. En effet, les résultats d'un tel traitement ne correspondent pas à la simple addition des effets obtenus par traitement avec une protéase, avec ceux obtenus par traitement avec une phytase, et avec ceux obtenus après un simple ajout de bactéries lactiques.

La Société Demanderesse a d'ailleurs pu démontrer que les bactéries lactiques introduites dans l'eau de trempe consommaient des substances réductrices libérées à la suite du traitement enzymatique. Plus précisément, ces substances réductrices semblent résulter des activités enzymatiques secondaires telles que amyloglucosidase, xylanase, cellulase, et autres hydrolases, présentes dans les préparations enzymatiques d'origine fongique de phytase et de protéase du commerce.

Ainsi, les eaux de trempe du maïs dans lesquelles des bactéries lactiques vivantes ont été introduites et soumises à un traitement combiné avec au moins une protéase et au moins une phytase présentent à la fois d'excellentes caractéristiques nutritionnelles et une stabilité microbiologique optimale.

Le procédé selon l'invention consiste à introduire au moins une protéase et au moins une phytase, simultanément ou successivement, dans l'eau de trempe du maïs, à les laisser agir sous agitation pendant une durée qui dépend du type d'enzymes et des quantités mises en oeuvre, à introduire des bactéries lactiques vivantes dans ces eaux de trempe, préalablement, simultanément ou successivement à l'introduction des enzymes, à suivre par prélèvements l'évolution au cours du temps du rapport Pi/Pt, la concentration en protéines et la teneur en substances réductrices totales, à inactiver ensuite ces enzymes, puis à concentrer la composition résultante par évaporation.

Une étape importante du procédé selon l'invention consiste donc en un traitement enzymatique.

Ce traitement s'effectue à la suite de l'étape de la trempe du maïs, sur une eau de trempe présentant une matière sèche comprise entre 5 et 25 %, et de préférence entre 15 et 20 %, un pH se situant entre 3,0 et 5,0, et une température variant entre 40 et 50°C.

Selon un mode préférentiel de réalisation de l'invention, le traitement enzymatique s'appliquera à des eaux de trempe obtenues dans les conditions décrites dans le brevet français n° 79 22106, qui présentent déjà une composition favorable à une utilisation ultérieure dans les industries de fermentation.

L'ordre selon lequel les enzymes sont introduites importe peu : ainsi, le traitement à la protéase peut précéder ou faire suite au traitement à la phytase. De même les deux types d'enzymes peuvent être mis en oeuvre simultanément.

Les quantités d'enzymes utilisées dépendent de l'activité propre à l'enzyme choisie et des conditions de sa mise en oeuvre (type de substrat, concentration du substrat, pH, température, durée du traitement).

Ces quantités sont comprises entre 0,1 et 2,0 % par rapport à la matière sèche du milieu en ce qui concerne la protéase et entre 0,01 % et 0,1 % en ce qui concerne la phytase, ce qui correspond à une plage de 0,06 UA à 1,2 UA pour 100 g de matière sèche du milieu en ce qui concerne la protéase, et de 50 à 500 UP pour 100 g de matière sèche du milieu en ce qui concerne la phytase.

L'Unité Anson (UA) est l'unité protéasique, définie comme étant la quantité d'enzyme qui, à la température et au pH optimum de celle-ci, hydrolyse l'hémoglobine pour produire 1 micromole de Tyrosine par minute selon la méthode colorimétrique mettant en oeuvre le réactif de Folin Clocalteu. (Pour une description détaillée de cette méthode, on peut se référer à l'article de M.L. ANSON publié en 1939 dans J. Gen. Physiol 22, 79-89).

L'Unité Phytasique (UP) est définie comme correspondant à la quantité d'enzyme qui, à un pH de 5,5 et une température de 37°C, libère une micromole de phosphore inorganique par minute, à partir d'une solution de phytate de sodium à 0,0015 mole/litre. (Pour une description détaillée de cette méthode, on peut se référer à la demande internationale de brevet n° 93/16175).

La durée du traitement enzymatique varie entre 4 et 16 heures.

Le traitement est de préférence effectué sous agitation constante.

Les protéases utilisables dans le procédé selon l'invention sont choisies en particulier parmi les protéases acides, telles que celles fabriquées par la Société BIOCON (ACID PROTEASE L B 59), par la Société GIST BROCADES (PROTEASE A), par la Société RÖHM (COROLASE PS), par la Société GENENCOR (PROTEASE B99), ou encore par la Société NOVO (FLAVOURZYME).

Le traitement protéase peut également résulter de la présence-même, au sein de l'eau de trempe, de protéases endogènes, c'est-à-dire générées par les bactéries qui se sont développées au cours de l'opération de trempe.

En ce qui concerne les phytases, on peut citer à titre d'exemple FINASE fabriquée par la Société ALKO, ou NATUPHOS 5000 commercialisée par la Société BASF, ou NOVO PHYTASE commercialisée par la Société NOVO.

Une autre étape importante du procédé selon l'invention consiste à introduire des bactéries lactiques vivantes dans les eaux de trempe du maïs.

De préférence, les bactéries lactiques seront introduites préalablement ou simultanément au traitement enzymatique.

L'introduction des bactéries lactiques est effectuée soit par inoculation d'une culture de bactéries lactiques, soit à l'aide de bactéries lactiques obtenues après concentration, notamment par centrifugation, d'un milieu les contenant.

En ce qui concerne la culture de bactéries lactiques, celle-ci peut être obtenue à partir de germes lactiques de toute espèce du genre Lactobacillus, et notamment Lactobacillus delbrueckii ou Lactobacillus leichmanii. Ces germes lactiques sont cultivés sur un milieu liquide adapté à leur croissance et ceci à 48°C pendant au moins 8 heures sous légère agitation. Un inoculum de 1 à 10 % sera introduit dans les eaux de trempe soumises au traitement enzymatique et ceci, selon leur concentration.

Le temps de contact entre les bactéries lactiques et l'eau de trempe soumise au traitement enzymatique sera au minimum de 8 heures.

Des prélèvements du milieu réactionnel sont réalisés à intervalles réguliers afin de déterminer les concentrations en phosphore inorganique et phosphore total, la concentration en protéine par mise en oeuvre du test C, ainsi que la teneur en substances réductrices totales.

Lorsque le rapport Pi/Pt atteint la valeur minimale de 35 %, que la concentration en protéine déterminée selon le test C devient inférieure ou égale à 5, et que la teneur en substances réductrices totales est inférieure ou égale à 0,9 %, les réactions enzymatiques peuvent être stoppées par inactivation des enzymes.

Selon un mode de réalisation préféré, les réactions enzymatiques seront stoppées lorsque le rapport Pi/Pt atteindra la valeur de 60 %, et de manière encore plus préférentielle 75 %, que la concentration en protéine déterminée selon le test C sera inférieure ou égale à 1, et de manière encore plus préférentielle inférieure ou égale à 0,5, et que la teneur en substances réductrices totales sera inférieure ou égale à 0,5 %, et de manière encore plus préférentielle inférieure ou égale à 0,2 %.

Pour inactiver les enzymes, on a recours à des moyens physiques (température) et/ou chimiques (pH). De préférence, on soumet le milieu réactionnel à un chauffage à 80-100°C pendant un temps compris entre 10 et 30 minutes.

Afin d'éliminer les microorganismes et notamment les bactéries lactiques inactivées lors du traitement d'inactivation des enzymes et afin d'obtenir ainsi un produit limpide, la composition peut être centrifugée ou filtrée sur terre sur tolle ou sur membrane de micro-filtration ou d'ultrafiltration.

Afin d'améliorer la filtrabilité, il est possible d'ajouter des enzymes type xylanases, hémicellulases, arabinoxylanases, qui permettent d'hydrolyser les substances insolubles autres que les protéines et les phytates et les bactéries lactiques.

Le procédé objet de la présente invention permet ainsi l'obtention d'un produit dont la matière sèche peut atteindre 65 %, ce qui présente nombre d'avantages comme cela a été décrit précédemment.

Les compositions selon l'invention, grâce à leurs excellentes caractéristiques nutritionnelles, et leur stabilité améliorée présentent un intérêt particulier lorsqu'elles sont utilisées comme substrats de fermentation. Elles constituent en effet un substrat satisfaisant à la production dans de bonnes conditions de levures, de bactéries lactiques, ou d'autres microorganismes, mais également d'enzymes, d'antibiotiques, d'amino-acides, d'acides organiques, de vitamines ou de biopesticides.

Elles sont également particulièrement adaptées à la production de métabolites obtenus par des microorganismes génétiquement modifiés.

En outre, elles intéressent l'industrie alimentaire, pour leurs propriétés nutritionnelles et pour leurs propriétés aromatiques, et sont ainsi utilisables en tant qu'aliment ou en tant qu'exhausteurs de goût dans des compositions destinées à l'alimentation humaine ou animale.

Enfin, leurs caractéristiques nutritionnelles les rendent tout-à-fait adaptées à une utilisation dans la préparation d'engrais destinés aux végétaux.

Les exemples donnés ci-après viennent illustrer l'invention sans toutefois la limiter.

### EXEMPLE 1 :

Fabrication de deux compositions nutritives selon l'invention.

Composition 1A :

Dans un réacteur de 2 litres, équipé de moyens d'agitation et de régulation de la température, 1,5 litre de corn-steep à 200 g/l de matière sèche sont introduits. La température du substrat est ajustée à 48°C et l'agitation à 200 tr/mn. Le pH du produit n'est pas ajusté et reste donc le pH naturel du corn-steep soit environ 4,2.

On prépare alors selon le protocole suivant une culture de bactéries lactiques à partir de la souche Lactobacillus delbrueckii. Cette souche, conservée sur milieu gélosé MRS (MAN-ROGOSA-SHARP) commercialisé par BIOKAR DIAGNOSTICS, préalablement cultivée à 48°C, est utilisée afin d'ensemencer 100 ml de milieu de culture préparé par addition de 1 % d'extraits de levure, 2 % de glucose et 0,5 % de carbonate de calcium dans de l'eau déminéralisée. Ce milieu, introduit dans un erlenmeyer, est placé à 48°C sous légère agitation pendant 8 heures.

Cette culture de bactéries lactiques est alors ajoutée au corn steep.

Une heure après ajoût des bactéries lactiques, sont introduites simultanément la phytase NATUPHOS 5000 (BASF) à un taux de 0,03 % par rapport à la matière sèche du substrat ainsi que la protéase ACID PROTEASE LB59 fabriquée par la Société BIOCON à une dose de 1,5 % par rapport à la matière sèche du substrat.

La durée totale du traitement est de 16 heures, au cours desquelles on suit l'évolution du rapport Pi/Pt, la concentration des protéines et la concentration en subtances réductrices par prélèvement d'échantillons du milieu réactionnel toutes les 4 heures.

Les réactions enzymatiques et biologiques sont alors inactivées par un chauffage à 90°C pendant 20 minutes puis refroidissement à température ambiante. Le produit résultant est alors centrifugé à 20°C à une vitesse de 4500 g pendant 15 minutes. Le culot, essentiellement constitué de bactéries lactiques inactivées, est éliminé, le surnageant est concentré sur un évaporateur de laboratoire jusqu'à une matière sèche de 50 %. Le produit obtenu est ensuite refroidi jusqu'à la température ambiante sous agitation.

La composition obtenue selon le procédé décrit ci-dessus présente un rapport Pi/Pt de 79 %.

Le dosage des protéines réalisé selon le test C donne une valeur de 0,25.

Le dosage des substances réductrices donne une valeur égale à 0,2 %.

Composition 1B :

Dans un réacteur de 2 1 équipé de moyens d'agitation et de régulation de la température, 1,5 l de corn steep à 150 g/l de matière sèche sont introduits. La température du substrat est ajustée à 48°C et l'agitation à 200 t/mn. Le pH du produit n'est pas ajusté et reste donc au pH naturel du corn steep.

A ce substrat, sont ajoutées :

- la phytase NATUPHOS 5000 BASF à un taux de 0,03 % par rapport à la matière sèche du substrat
- la protéase ACID PROTEASE LB59 fabriquée par la Société BIOCON à la dose de 1,5 % par rapport à a matière sèche du substrat.

La réaction enzymatique est alors initiée. Après 2 heures, sont ajoutées au corn-steep traité enzymatiquement des bactéries lactiques obtenues après concentration par centrifugation de 100 ml d'eaux de trempe issues du dernier silo de trempe du maïs avant évaporation. La durée totale de ce traitement est de 16 heures au cours de laquelle on suit l'évolution du rapport Pi/Pt, la concentration en protéines et la teneur en substances réductrices par prélèvement du milieu réactionnel toutes les 4 heures. Les réactions enzymatiques et biologiques sont alors inactivées par un chauffage à 90°C pendant 20 mn puis refroidissement à la température ambiante.

Le produit résultant est alors centrifugé à 20°C à une vitesse de 4500 g pendant 15 minutes. Le culot, essentiellement constitué de bactéries lactiques inactivées, est éliminé, le surnageant est concentré sur un évaporateur de laboratoire jusqu'à une matière sèche de 50 %.

La composition obtenue selon le procédé décrit ci-dessus présente un rapport Pi/Pt de 78 %, le dosage des protéines réalisé selon le Test C donne une valeur de 0,2 et le dosage des substances réductrices donne une valeur inférieure à 0,25 %.

**EXEMPLE 2 :**

Fabrication de quatre compositions 2A 2B 2C et 2D selon l'art antérieur

La composition 2A correspond à un corn-steep témoin à 200 g/l de matière sèche qui n'a subi aucun traitement enzymatique ni addition de bactéries lactiques.

La composition 2B correspond à un corn-steep à 200g/l de matière sèche qui n'a subi aucun traitement enzymatique mais dans lequel a été ajoutée une culture de bactéries lactiques obtenue selon le mode opératoire suivi pour la préparation de la composition 1A.

La composition 2C est obtenue selon le procédé décrit pour obtenir la composition 1A à ceci près que seule la protéase ACID PROTEASE LB 51 fabriquée par BIOCON a été ajoutée au corn steep, à un taux de 1,5 % par rapport à la matière sèche du substrat.

La composition 2D est obtenue selon le procédé décrit pour obtenir la composition 1A, à ceci près que seule la phytase NATUPHOS 5000 (BASF) a été ajoutée au corn-steep, à un taux de 0,025 % par rapport à la matière sèche du substrat.

Les rapports Pi/Pt, les concentrations en protéine mesurées selon le test C, et les teneurs en substances réductrices (S.R.) totales de chacune des quatre compositions 2A, 2B, 2C et 2D sont données ci-après.

|        | 2A  | 2B  | 2C   | 2D  |
|--------|-----|-----|------|-----|
| Pi/Pt  | 20  | 22  | 20   | 78  |
| Test C | 1,3 | 1,1 | 0,45 | 1,1 |
| S.R.   | 2   | 0,2 | 2,5  | 2,7 |

Ces quatre compositions sont ensuite concentrées jusqu'à une matière sèche de 50 %.

**EXEMPLE 3 :**

Mise en évidence de la stabilité physique et microbiologique des compositions nutritives selon l'invention

3a. Test de décantation

La composition nutritive 1A selon l'invention est soumise à un test de décantation, comparativement aux quatre compositions 2A, 2B, 2C et 2D décrites dans l'Exemple 2.

Ce test consiste à mesurer la hauteur du culot après décantation d'une composition préalablement stérilisée.

La composition 1A selon l'invention ainsi que les compositions 2A, 2B, 2C et 2D sont d'abord diluées à 25 g/litre, puis leur pH est ajusté à une valeur de 7 par addition d'une solution de soude 1N. Cette valeur de pH correspond à un niveau maximum de coagulation des protéines.

Ces compositions sont alors soumises à une stérilisation par chauffage à une température de 120°C durant 20 minutes. Elles sont ensuite refroidies, homogénéisées puis introduites dans des éprouvettes graduées dans lesquelles on les laisse décanter.

Pour chacune des 5 compositions, la hauteur du culot est mesurée après 30 minutes, et après 16 heures. Les valeurs obtenues, exprimées en millimètre, sont les suivantes :

| Composition | 30 mn | 16 heures |
|-------------|-------|-----------|
| 1A (Invention) | 12 | 10 |
| 2A | 170 | 85 |
| 2B | 175 | 90 |
| 2C | 160 | 80 |
| 2D | 50 | 35 |

A la lecture de ces résultats, la supériorité de la composition selon l'invention apparaît nettement. En effet, le culot est considérablement réduit par rapport à celui observé après stérilisation de chacune des compositions selon l'art antérieur.

3b. Test de coloration

La composition nutritive IA selon l'invention est soumise à un test de coloration, comparativement aux quatre compositions 2A, 2B, 2C et 2D décrites dans l'exemple 2.

Ce test consiste à mesurer la coloration des compositions immédiatement après leur concentration à 50 % de matière sèche, puis après 1 mois de stockage à température ambiante.

Cette mesure de coloration est effectuée de la manière suivante. 10 g des compositions à 50 % de matière sèche sont introduits dans 50 ml d'eau distillée. On y ajoute ensuite 75ml d'une solution de nitrate de plomb à 25 g/1. Après agitation puis filtration, les densités optiques (D) sont mesurées à 450 nanomètres et 650 nanomètres. La coloration est donnée par la formule :

$$D.O. = \frac{D\ (450\ nm) - D\ (650\ nm)}{4} \times 160$$

Les valeurs obtenues sont les suivantes :

| Composition | Après concentration | Après 1 mois |
|-------------|---------------------|--------------|
| 1A (Invention) | 4,3 | 4,9 |
| 2A | 2,5 | 7,2 |
| 2B | 2,5 | 3,2 |
| 2C | 5,2 | 8,4 |
| 2D | 8,1 | 16,3 |

Une évolution de la coloration au cours du stockage est significative d'une instabilité physique du produit.

La composition selon l'invention apparaît comme étant parfaitement stable puisque sa coloration n'évolue pratiquement pas après 1 mois de stockage, contrairement aux compositions de l'art antérieur.

3c. Test de stabilité microbiologique

La composition nutritive 1A selon l'invention est soumise à un test de stabilité microbiologique, comparativement aux quatre compositions 2A, 2B, 2C et 2D décrites dans l'exemple 2.Ce test consiste à effectuer une numération des levures après 15 jours de stockage à température ambiante des différentes compositions. Ces numérations sont effectuées sur milieu OGA (Oxytétracycline-Glucose-Agar) commercialisé par BIOKAR DIAGNOSTICS après 48 heures d'incubation à 30°C. Les résultats obtenus, exprimés en CFU (Colonie formant unité) par ml, sont les suivants :

| Composition | CFU/ml |
|---|---|
| 1A (Invention) | 100 |
| 2A | 1200 |
| 2B | 80 |
| 2C | 1850 |
| 2D | 1700 |

La lecture de ces résultats permet de conclure à l'excellente stabilité microbiologique de la composition selon l'invention, que seule la composition connue 2B peut peut égaler sur ce plan.

## EXEMPLE 4 :

Application des compositions selon l'invention à la croissance de microorganismes.

4a. L'étude décrite ci-après consiste à suivre l'augmentation du nombre de cellules en fonction du temps dans des milieux de culture contenant une concentration donnée de la composition nutritive LA selon l'invention comparativement à un milieu de culture contenant la même concentration des compositions 2A, 2B, 2C, 2D décrites dans l'Exemple 2.

L'étude concerne la croissance d'une souche de Bacillus subtilis.

On prépare des milieux de culture par addition dans de l'eau déminéralisée de glucose à raison de 10 g/l et de la composition nutritive 1A à une concentration de 2,6 g/l. (Cette concentration correspond à un équivalent azote de 0,086 g/l). Simultanément et de la même façon, on prépare des milieux de culture contenant 2,6 g/l des compositions 2A, 2B, 2C, 2D décrites dans l'Exemple 2.

Ces milieux de culture sont alors stérilisés à 120°C pendant 20mn.

On ensemence alors 100 ml de chacun de ces milieux avec 0,1 % en volume d'une préculture de la souche.

L'incubation est réalisée à 30°C sous une agitation de 280 tours par minute pendant 24 heures.

Les numérations sont effectuées aux temps 0, 8 heures et 24 heures sur milieu gélosé trypticase-soja (DIFCO).

Les résultats obtenus, exprimés en CFU (Colonie formant unité) par ml, sont rassemblés dans le tableau ci-après.

| Composition | CFU/ml | | |
|---|---|---|---|
| | 0 h | 8 h | 24 h |
| 1A (Invention) | $1,9.10^2$ | $7,3.10^6$ | $2,6.10^9$ |
| 2A | $1,1.10^2$ | $2.10^6$ | $1,6.10^8$ |
| 2B | $1,25.10^2$ | $2.10^6$ | $1,9.10^8$ |
| 2C | $1,5.10^2$ | $3,5.10^6$ | $5.10^8$ |
| 2D | $1,9.10^2$ | $6,2.10^6$ | $10^9$ |

Les résultats obtenus démontrent les qualités nutritives particulièrement intéressantes de la composition selon l'invention par rapport aux compositions ne présentant pas les caractéristiques revendiquées.

4b. L'étude décrite ci-après consiste à suivre l'évolution de la croissance de levures du genre Saccharomyces cerevisiae par mesure de la consommation de glucose et de l'absorbance en fonction du temps, dans un milieu de culture contenant une concentration donnée de la composition nutritive 1A selon l'invention comparativement à un milieu de culture contenant la même concentration de la composition nutritive 2A décrite dans l'exemple 2.

On prépare les milieux de culture par addition, dans de l'eau déminéralisée, de glucose à raison de 50 g/l et de la composition nutritive 1A ou 2A à une concentration de 10 g/l. Le pH de chacun de ces milieux avant stérilisation est ajusté à 5 par addition de soude. Ceux-ci sont alors stérilisés à 120°C pendant 20 mn dans des fermenteurs de 2 litres à raison de 1,5 litres de milieu par fermenteur.

Chaque fermenteur est alors ensemencé avec 100 ml d'une préculture de Saccharomyces cerevisiae contenue dans un erlen de 500 ml et obtenue comme suit : dans de l'eau déminéralisée sont ajoutés du glucose à raison de 10 g/l et des extraits de levure à raison de 2 g/l. Après stérilisation, ce milieu de préculture est ensemencé avec la souche <u>Saccharomyces cerevisiae</u> cultivée sur milieu gélosé OGA. Le milieu est agité sur un shaker à 200 tours par minute maintenu à 30°C pendant 8 heures.

Après ensemencement, les fermenteurs maintenus à 30°C sont agités à 1 v/v/mn (volume d'air par volume de milieu par minute).

On mesure l'absorbance et la concentration en glucose de chacun d'eux après 17 heures et 24 heures.

Les résultats obtenus sont rassemblés dans le tableau ci-après :

|  | | 1A | | 2A | |
| --- | --- | --- | --- | --- | --- |
|  | | (Invention) | | | |
|  | Absorbance | Glucose en g/l | Absorbance | Glucose en g/l |  |
| 0 h. | 0,4 | 40 | 0,6 | 40 | |
| 17 h. | 16,6 | 14 | 14 | 22 | |
| 24 h. | 25,5 | 0 | 20,7 | 8 | |

L'absorbance a été mesurée à 620 nm sur des dilutions au 1/50e. Les valeurs indiquées ci-dessus correspondent à l'absorbance lue multipliée par le facteur de dilution.

Les résultats obtenus démontrent les excellentes qualités nutritives de la composition selon l'invention. On observe en effet que le milieu de culture contenant la composition nutritive selon l'invention permet une croissance accélérée de la levure, ce qui se traduit par une diminution de la concentration en glucose et une augmentation de l'absorbance au cours du temps plus rapides qu'avec un milieu de culture contenant un corn-steep non traité.

L'ensemble des résultats donnés dans les exemples 3 et 4 ci-dessus démontre que seules les compositions selon l'invention présentent l'ensemble des qualités requises, tant au niveau de leur stabilité physique qu'au niveau de leur stabilité microbiologique, ce qui en fait des compositions aux caractéristiques nutritives excellentes, parfaitement adaptées à des utilisations nécessitant une étape de stérilisation.

## Revendications

**1.** Composition nutritive résultant de la trempe du maïs, caractérisée par le fait qu'elle présente un rapport des concentrations en phosphore inorganique et phosphore total(Pi/Pt) compris entre 35 et 95 %, que le dosage des protéines qu'elle contient, réalisé selon un test C (méthode Bradford, Analysis Biochemistry, 1976, 72, p 248), donne une valeur inférieure ou égale à 5, et que sa teneur en substances réductrices totales mesurée selon la méthode décrite dans la description, est inférieure ou égale à 0,9 %.

**2.** Composition nutritive selon la revendication 1, caractérisée par le fait que son rapport Pi/Pt est compris entre 60 et 95 %, de préférence entre 75 et 85 %, que le dosage des protéines qu'elle contient, réalisé selon un test C, donne une valeur inférieure ou égale à 1, de préférence inférieure ou égale à 0,5, et que sa teneur en substances réductrices est inférieure ou égale à 0,5 %, de préférence inférieure ou égale à 0,2 %.

**3.** Composition nutritive selon l'une ou l'autre des revendications 1 et 2, caractérisée par le fait qu'elle présente une matière sèche supérieure ou égale à 60 %.

**4.** Procédé d'obtention d'une composition nutritive selon la revendication 1, caractérisée par le fait que l'on soumet les eaux de trempe du maïs à un traitement enzymatique à l'aide d'au moins une protéase et d'au moins une phytase et que l'on ajoute et fait agir préalablement, simultanément ou successivement au dit traitement enzymatique, des bactéries lactiques vivantes.

**5.** Procédé selon la revendication 4, caractérisé par le fait qu'il consiste :

-   à introduire successivement ou simultanément dans l'eau de trempe du maïs au moins une protéase et au moins une phytase,
-   à introduire et à laisser agir, dans l'eau de trempe du maïs, préalablement ou simultanément à l'introduction des enzymes, des bactéries lactiques,
-   à laisser agir les enzymes sous agitation,

- à suivre, par prélèvements, l'évolution au cours du temps du rapport Pi/Pt, de la concentration en protéines, et de la teneur en substances réductrices totales,
- à inactiver les enzymes,
- à concentrer la composition résultante par évaporation.

6. Procédé selon l'une ou l'autre des revendications 4 et 5, caractérisé par le fait que le traitement enzymatique est effectué à une température variant entre 40 et 50°C, sur une eau de trempe dont la matière sèche est comprise entre 5 et 25 % et le pH entre 3 et 5.

7. Procédé selon l'une quelconque des revendications 4 à 6, caractérisé par le fait que le temps de contact entre les bactéries lactiques et l'eau de trempe soumise au traitement enzymatique est d'au moins 8 heures.

8. Utilisation d'une composition nutritive selon l'une quelconque des revendications 1 à 3 comme milieu de culture de microorganismes.

9. Utilisation d'une composition nutritive selon l'une quelconque des revendications 1 à 3 en tant qu'aliment ou additif alimentaire dans des compositions destinées aux êtres humains.

10. Utilisation d'une composition nutritive selon l'une quelconque des revendications 1 à 3 en tant qu'aliment ou additif alimentaire dans des compositions destinées aux animaux.

11. Utilisation d'une composition nutritive selon l'une quelconque des revendications 1 à 3 en tant qu'agent pour la préparation d'engrais destinés aux végétaux.

## Claims

1. Nutritional composition resulting from the steeping of maize, characterized in that it exhibits a ratio of the concentrations of inorganic phosphorus and total phosphorus (Pi/Pt) between 35 and 95%, in that the assay of the proteins which it contains, said assay being carried out using a C test according to the method described in the description, gives a value less than or equal to 5, and in that its content of total reducing substances is less than or equal to 0.9%.

2. Nutritional composition according to Claim 1, characterized in that its Pi/Pt ratio is between 60 and 95%, preferably between 75 and 85%, in that the assay of the proteins which it contains, said assay being carried out using a C test, gives a value less than or equal to 1, preferably less than or equal to 0.5%, and in that its content of reducing substances is less than or equal to 0.5%, preferably less than or equal to 0.2%.

3. Nutritional composition according to either of Claims 1 and 2, characterized in that it exhibits a dry matter content which is greater than or equal to 60%.

4. Process for obtaining a nutritional composition according to Claim 1, characterized in that maize-steeping water is subjected to an enzyme treatment using at least one protease and at least one phytase, and in that viable lactic acid bacteria are added and reacted , prior to, at the same time as, or following the said enzyme treatment.

5. Process according to Claim 4, characterized in that it consists of the following steps:

- introducing, consecutively or simultaneously, at least one protease and at least one phytase into the maize-steeping water,
- introducing lactic acid bacteria, prior to or at the same time as introducing the enzymes, into, and allowing them to react in, the maize-steeping water,
- allowing the enzymes to react, while stirring,
- monitoring, by means of sampling , the change over time in the Pi/Pt ratio, in the protein concentration and in the content of total reducing substances,
- inactivating the enzymes, and
- concentrating the resulting composition by evaporation.

6. Process according to any one of Claims 4 and 5, characterized in that the enzyme treatment is carried out at a temperature which varies between 40 and 50°C, on steeping water whose dry matter content is between 5 to 25% and whose pH is between 3 and 5.

7. Process according to any one of Claims 4 to 6, characterized in that the contact time between the lactic acid bacteria and the steeping water which has been subjected to the enzyme treatment is at least 8 hours.

8. Use of nutritional composition according to any one of Claims 1 to 3 as medium for culturing microorganisms.

9. Use of a nutritional composition according to any one of Claims 1 to 3 as a foodstuff or alimentary additive in compositions which are intended for human beings.

10. Use of a nutritional composition according to any one of Claims l to 3 as a foodstuff or alimentary additive in compositions intended for animals.

11. Use of a nutritional composition to any one of claims 1 to 3 as an agent for preparing fertilizers which are intended for plants.

**Patentansprüche**

1. Nährzusammensetzung, resultierend aus dem Wasser des Einweichens von Mais, dadurch gekennzeichnet, daß sie ein Verhältnis der Konzentrationen von anorganischem Phosphor und Gesamtphosphor (Pa/Pg) zwischen 35 % und 95 % aufweist, daß die Bestimmung der sie enthaltenden Proteine, die gemäß einem Test C (Methode Bradford, Analysis Biochemistry, 1996, 72, S.248) realisiert wird, einen Wert von unterhalb oder gleich 5 ergibt, und daß ihr Gesamtgehalt an reduzierenden Substanzen, gemessen nach der in der Beschreibung genannten Methode, unterhalb von oder gleich 0,9 % beträgt.

2. Nährzusammensetzung nach Anspruch 1, dadurch gekennzeichnet, daß ihr Verhältnis Pa/Pg zwischen 60 % und 95 %, vorzugsweise zwischen 75 % und 85 %. liegt, daß die Bestimmung der sie enthaltenden Proteine, die gemäß einem Test C realisiert wird, einen Wert von unterhalb oder gleich 1, vorzugsweise von unterhalb oder gleich 0,5 ergibt, und daß ihr Gehalt an reduzierenden Substanzen unterhalb von oder gleich 0,5 %, vorzugsweise unterhalb von oder gleich 0,2 % beträgt.

3. Nährzusammensetzung nach dem einen oder anderen der Ansprüche 1 und 2, dadurch gekennzeichnet, daß sie eine Trockensubstanz von höher oder gleich 60 % aufweist.

4. Verfahren zur Herstellung einer Nährzusammensetzung nach Anspruch 1, dadurch gekennzeichnet, daß man die Wässer aus dem Einweichen von Mais einer enzymatischen Behandlung mit Hilfe von mindestens einer Protease und mindestens einer Phytase unterzieht, und daß man vorher, gleichzeitig oder schrittweise zu der genannten enzymatischen Behandlung lebende Milchsäurebakterien zusetzt und einwirken läßt.

5. Verfahren nach Anspruch 4, dadurch gekennzeichnet, daß es besteht aus:

    - dem schrittweisen oder gleichzeitigen Eintragen von mindestens einer Protease und mindestens eine Phytase in das Wasser aus dem Einweichen von Mais,
    - dem Eintragen und Einwirkenlassen von Milchsäurebakterien in das Wasser aus dem Einweichen von Mais, vorher oder gleichzeitig mit dem Eintragen der Enzyme,
    - dem Einwirkenlassen der Enzyme unter Rühren,
    - dem Verfolgen mit Hilfe von Entnahmen im Laufe der Zeit von: der Entwicklung des Verhältnisses (Pa/Pg), der Konzentration an Proteinen und dem Gesamtgehalt an reduzierenden substanzen,
    - dem Inaktivieren der Enzyme,
    - dem Konzentrieren der erhaltenen Zusammensetzung durch Eindampfen.

6. Verfahren nach dem einen oder anderen der Ansprüche 4 und 5, dadurch gekennzeichnet, daß die enzymatische Behandlung bei einer Temperatur zwischen 40 °C und 50 °C mit einem Einweichwasser durchgeführt wird, dessen Trockensubstanz zwischen 5 % und 25 % und dessen pH-Wert zwischen 3 und 5 betragen.

7. Verfahren nach irgendeinem der Ansprüche 4 bis 6, dadurch gekennzeichnet, daß die Kontaktzeit zwischen den Milchsäurebakterien und dem der enzymatischen Behandlung unterzogenen Einweichwasser mindestens 8 Stunden beträgt.

8. Verwendung einer Nährzusammensetzung nach irgendeinem der Ansprüche 1 bis 3 als Kulturmedium für Mikroorganismen.

9. Verwendung einer Nährzusammensetzung nach irgendeinem der Ansprüche 1 bis 3 als Nahrungsmittel oder Nahrungszusatzstoff in für den Menschen vorgesehenen Zusammensetzungen.

10. Verwendung einer Nährzusammensetzung nach irgendeinem der Ansprüche 1 bis 3 als Nahrungsmittel oder Nahrungszusatzstoff in für Tiere vorgesehenen Zusammensetzungen.

11. Verwendung einer Nährzusammensetzung nach irgendeinem der Ansprüche 1 bis 3 als Mittel zur Herstellung von für Pflanzen vorgesehenen Düngern.